**Europäisches Patentamt**

**European Patent Office**

**Office européen des brevets**

(19)

(11) Veröffentlichungsnummer: **0 170 890**
**B1**

(12) # EUROPÄISCHE PATENTSCHRIFT

(45) Veröffentlichungstag der Patentschrift:
**19.04.89**

(21) Anmeldenummer: **85108324.6**

(22) Anmeldetag: **05.07.85**

(51) Int. Cl.⁴: **A 01 N 25/22**

(54) **Verfahren zur Stabilisierung von Zineb.**

(30) Priorität: **14.07.84 DE 3426078**

(43) Veröffentlichungstag der Anmeldung:
**12.02.86 Patentblatt 86/7**

(45) Bekanntmachung des Hinweises auf die Patenterteilung:
**19.04.89 Patentblatt 89/16**

(84) Benannte Vertragsstaaten:
**AT BE CH DE FR GB IT LI NL SE**

(56) Entgegenhaltungen:
**AT-B-339 666**
**DE-A-1 567 068**
**DE-A-2 445 848**
**FR-A-1 404 865**
**FR-A-2 392 605**

(73) Patentinhaber: **BASF Aktiengesellschaft, Carl-Bosch- Strasse 38, D-6700 Ludwigshafen (DE)**

(72) Erfinder: **Fischer, Roman, Dr., Deidesheimer Strasse 1, D-6704 Mutterstadt (DE)**
Erfinder: **Koob, Knut, Dr., Lorscher Strasse 7, D-6704 Mutterstadt (DE)**
Erfinder: **Loecher, Friedrich, Dr., Kropsburgstrasse 34, D-6703 Limburgerhof (DE)**

EP 0 170 890 B1

**Beschreibung**

Die vorliegende Erfindung betrifft ein Verfahren zur Stabilisierung von Zineb durch Zumischung von Calciumoxid in Abwesenheit von Schwefel.

Es ist bekannt, Zineb (Zinksalz der Ethylenbisdithiocarbaminsäure) als Fungizid zu verwenden (US-2 317 765). Es ist ferner bekannt, den Zineb-Ammoniak-Komplex als Fungizid zu verwenden (DE-1 191 170). Unter Zineb werden daher im folgenden sowohl das Zinksalz der Ethylenbisdithiocarbaminsäure als auch seine Komplexe mit Ammoniak, wobei die Ammoniakmenge schwanken kann, verstanden.

Zineb hat den Nachteil, daß es sich beim Aufbewahren insbesondere bei erhöhter Temperatur zersetzt. Es besteht daher die Aufgabe, ein Zineb herzustellen, das sich nicht oder nur wenig zersetzt. Es ist ferner bekannt, Zineb mit Calciumhydroxid und Schwefel zu mischen (FR-1 404 865). Die Mischung hat den Nachteil, daß durch die Zumischung des Schwefels die fungizide Wirkung von Zineb in nicht erwünschter Weise verändert wird, wenn nur die fungizide Wirkung von Zineb gewünscht wird. In der DE-A-1 567 068 wird die Zumischung von Calciumhydroxid zu Zineb bei der Suspendierung in Kasser empfehlen.

Es wurde gefunden, daß man ein Zineb erhält, das gegen Zersetzung weitgehend stabil ist, wenn man dem trockenen Zineb in Abwesenheit von Schwefel Calciumoxid zumischt. Unter Calciumoxid ist sowohl Calciumoxid als solches (CaO) als auch Calciumhydroxid (Ca(OH)$_2$) zu verstehen. Ein guter Effekt wird erreicht, wenn man dem Zineb 2 bis 8 Gew.-% Calciumoxid, vorzugsweise 3 Gew.-%, berechnet auf Zineb, zumischt.

Eine Zumischung von weniger als 1 % bringt keine signifikante Verbesserung der Stabilität, während eine Zumischung von mehr als 15 % das Zineb zu sehr verdünnt.

**Herstellungsbeispiel** für eine Mischung mit 5 Gew.-% CaO

Man setzt 1 Mol Ethylendiamin mit 2 Mol CS$_2$ und 2 Mol NH$_4$OH um. Das dabei entstehende Ammonium-Ethylenbisdithiocarbamat wird mit 1 Mol einer wäßrigen ZnCl$_2$-Lösung als Zineb gefällt. Der Niederschlag wird grob entwässert und durch Zugabe von 20 % (ber. Zineb trocken) oberflächenaktiven Stoffen in eine Sprühsuspension überführt, gesprüht und getrocknet. Zu dieser getrockneten Ware werden 5 Gew.-% (ber. Zineb trocken) CaO zugesetzt und mittels eines Rührers homogen vermischt.

Verwendet man mehr NH$_4$OH als für die Umsetzung des Ethylenbisdithiocarbamates notwendig ist, so werden je nach Überschuß 1 oder 2 Mol NH$_3$ je Mol Zineb gebunden.

**Versuchsdurchführung**

Reagenzglaslagertest

1. Prinzip:

Man gibt das Produkt in Reagenzgläser und lagert es sowohl in offenem wie auch in fest verschlossenem Zustand bei verschiedenen Temperaturen, ohne Luftfeuchteregelung.
Bei dieser Versuchsdurchführung kann lediglich die Lagerstabilität des Wirkstoffes bei bestimmten Temperaturen ermittelt werden.

2. Durchführung:

Die Reagenzgläser werden bis ca. 2 cm unter den oberen Rand gefüllt und bei 50°C in einem Wärmeschrank gelagert. In Abständen von 1, 2, 4, 8 und 12 Wochen werden Analysen (abspaltbarer CS$_2$) durchgeführt.

3. Bewertung:

Tabellarisch läßt sich der Wirkstoffverlust in Abhängigkeit von der Zeit darstellen und gibt Hinweise auf das Lagerungsverhalten.

Becherglaslagertest

1. Prinzip:

In 250 ml Bechergläser (Ø 6 - 6,5 cm) werden die zu untersuchenden Probenmuster (ca. 20 g) eingewogen und mit Gewichten (25 g/cm$^2$) belastet verschiedenen Temperaturen ohne Luftfeuchteregelung ausgesetzt. Begutachtet werden die physikalischen Eigenschaften der Formulierungen wie auch die Stabilität des Wirkstoffes.

2. Durchführung:

Pro Becherglas werden je 20 g Produkt eingewogen und in belastetem Zustand bei Raumtemperatur, 40°C und bei 50°C gelagert und analysiert nach 4, 10, 20, 50, 60, 70 und 100 Wochen.

3. Bewertung:

Die Werte des Wirkstoffverlustes während der Dauer des Lagerungstests dienen der Beurteilung des Lagerungsverhaltens.

**Mischungen:**

A   80 Gew.-Teile Zineb.$NH_3$ + 10 Teile Netzmittel + 9 Teile Kaolin + 1 Teil Dispergiermittel + 0 Teile CaO
Aa 80    Teile Zineb.$NH_3$ + 10 Teile Netzmittel + 7 Teile Kaolin + 1 Teil Dispergiermittel + 2 Teile CaO
Ab 80    Teile Zineb.$NH_3$ + 10 Teile Netzmittel + 4 Teile Kaolin + 1 Teil Dispergiermittel + 5 Teile CaO

C-Cb wie A-Ab nur Zineb.2$NH_3$ anstelle von Zineb.$NH_3$

D-Db wie A-Ab nur Zineb anstelle von Zineb.$NH_3$

E 82 Gew.-% Zineb.$NH_3$ + 2 % Netzmittel + 0,5 % Dispergiermittel + 13,5 % Kaolin

F 95 % Mischung E + 5 % CaO trocken vermischt.

**Lagerungsstabilität - Ergebnisse:**

Lagerung bei 50°C
Reagenzglaslagertest

| | | | Nach Wochen | |
|---|---|---|---|---|
| Probenbe-zeichnung | Ausgangswert Wirkstoffanteil | 4 Wirkstoffanteil | 8 Wirkstoffanteil | 12 Wirkstoffanteil |
| A | 100 | 0 | - | - |
| Aa | 100 | 77 | 56 | 55 |
| Ab | 100 | 88 | 85 | 86 |
| C | 100 | 0 | - | - |
| Ca | 100 | 32 | 0 | - |
| Cb | 100 | 95 | 11 | 0 |
| D | 100 | 39 | 35 | 10 |
| Da | 100 | 64 | 62 | 15 |
| Db | 100 | 69 | 68 | 59 |

Becherglaslagertest mit Belastung

| E | Lagerzeit in Wochen | Raumtemperatur Wirkstoffanteil | 40°C Wirkstoffanteil | 50°C Wirkstoffanteil |
|---|---|---|---|---|
| | 4 | 100 | 100 | 80 |
| | 10 | 100 | 15 | - |
| | 20 | 100 | 3 | - |
| | 50 | 90 | - | - |
| | 60 | 80 | - | - |
| | 70 | 80 | - | - |
| | 100 | 75 | - | - |

| F | Lagerzeit in Wochen | Raumtemperatur tur Wirkstoffanteil | 40°C Wirkstoffanteil | 50°C Wirkstoffanteil |
|---|---|---|---|---|
| | 4 | 100 | 100 | 100 |
| | 10 | 100 | 100 | 100 |
| | 20 | 100 | 100 | 90 |
| | 50 | 100 | 90 | 80 |
| | 60 | 100 | 80 | 75 |
| | 70 | 98 | 80 | 60 |
| | 100 | 95 | 70 | 50 |

Die folgenden Anwendungsbeispiele erläutern die gute fungizide Wirkung von erfindungsgemäß stabilisiertem Zineb im Vergleich mit bekannten Wirkstoffen. Die Anwendung erfolgte in Form einer wäßrigen Spritzbrühe, die aus dem Wirkstoff, Netzmittel (Additionsprodukt von Ethylenoxid an Nonylphenol) und Wasser hergestellt wurde. Es werden 600 Liter Spritzbrühe je ha verwendet.

Für die Anwendungsbeispiele wurden die folgenden Wirkstoffe verwendet: Mischfällung aus dem Ammoniak-Komplex von Zink-[N,N'-ethylen-bis-(dithiocarbamat)] und N,N'-Polyethylen-bis-(thiocarbamoyl)-disulfid (Metiram, DE-B-1 076 434), Mangan-ethylenbisdithiocarbamat (Maneb, US-2 504 404), Mangan-zinkethylenbisdithiocarbamat (Mancozeb, US-3 379 610), Mischung aus Zineb und 5 Gew.-% Calciumoxid (erfindungsgemäß, A, hergestellt gemäß Herstellungsbeispiel).

**Anwendungsbeispiel 1**

Bekämpfung von Venturia inaequalis an Apfel Sorte Golden Delicious im Freiland

| Mittel | Aufwandmenge kg/ha | Beh.-Termin + | Fruchtberostung Mengenanteil in % in verschiedenen Klassen für den Befall bei der Ernte ohne | leicht | mittel | stark |
|---|---|---|---|---|---|---|
| unbehandelt | - | - | 56,0 | 39,5 | 4,2 | 0,3 |
| Metiram | 3,0/2,25 | I/II+III * ** | 74,8 | 25,0 | 0,2 | 0 |
| Mancozeb | " | " | 69,0 | 29,7 | 1,3 | 0 |
| A | " | " | 77,0 | 22,5 | 0,5 | 0 |

Bemerkungen:
  + 1 L Spritzungen
  * Phase I: Vorblüte, Aufwandmenge 2,25 kg Wirkstoff/ha
  ** Phase II + III: Blüte + Nachblüte bis Triebabschluß, Aufwandmenge 3 kg Wirkstoff/ha

**Anwendungsbeispiel 2**

Bekämpfung von Plasmopara viticola in Reben (Sorte Grenache) im Freiland

| Mittel | Konzentration des Wirkstoffs in der Spritzbrühe in Gew.-% | Befall in % |
|---|---|---|
| unbehandelt | - | 72,7 |
| Metiram | 0,4 | 10,2 |
| Mancozeb | 0,35 | 10,4 |
| A | 0,4 | 7,5 |
| A | 0,35 | 9,5 |

## EP 0 170 890 B1

**Anwendungsbeispiel 3**

Bekämpfung von Phytophthora infestans an Kartoffeln im Freiland

| Mittel | Konzentration des Wirkstoffs in der Spritzbrühe in Gew.-% | Phytophthora infestans Befall in % |
|---|---|---|
| unbehandelt | - | 58,75 |
| Maneb | 1,8 | 23,75 |
| Metiram | 1,8 | 21,25 |
| A | 1,8 | 17,50 |

**Anwendungsbeispiel 4**

Bekämpfung von Alternaria solani an Tomaten (Sorte Floradale) im Freiland

| Mittel | Konzentration des Wirkstoffs in der Spritzbrühe in Gew.-% | Alternaria solani Befall in % |
|---|---|---|
| unbehandelt | - | 25,1 |
| Metiram | 0,2 | 12,2 |
| Maneb | 0,2 | 14,1 |
| A | 0,2 | 10,8 |

Bemerkungen: Aufwandmenge 1000 l Spritzbrühe/ha

**Patentansprüche**

Verfahren zur Stabilisierung von trockenem Zineb, dadurch gekennzeichnet, daß man Zineb in Abwesenheit von elementarem Schwefel mit 2 bis 8 Gew.-% Calciumoxid oder Calciumhydroxid mischt.

2. Stabilisiertes Zineb, erhältlich gemäß Anspruch 1.

3. Verwendung von 2 bis 8 Gew.-% Calciumoxid oder Calciumhydroxid zur Stabilisierung von trockenem Zineb in Abwesenheit von elementarem Schwefel.

4. Stabilisiertes trockenes Zineb, enthaltend 2 bis 8 Gew.-% Calciumoxid oder Calciumhydroxid in Abwesenheit von elementarem Schwefel.

5. Stabilisierte Mischung aus trockenem Zineb und 2 bis 8 Gew.-% Calciumoxid oder Calciumhydroxid, die keinen elementaren Schwefel enthält.

6. Verwendung eines stabilisierten trockenen Zinebs, das in Abwesenheit von elementarem Schwefel 2 bis 8 Gew.-% Calciumoxid oder Calciumhydroxid enthält, zur Bekämpfung von Pilzen.

**Claims**

1. A method of stabilizing dry zineb, wherein zineb is mixed with from 2 to 8 % by weight of calcium oxide or calcium hydroxide in the absence of elemental sulfur.

2. Stabilized zineb obtainable as claimed in claim 1.

3. Use of from 2 to 8 % by weight of calcium oxide or calcium hydroxide for stabilizing dry zineb in the absence of elemental sulfur.

4. Stabilized dry zineb containing from 2 to 8 % by weight of calcium oxide or calcium hydroxide in the absence of elemental sulfur.

5. A stabilized mixture of dry zineb and from 2 to 8 % by weight of calcium oxide or calcium hydroxide, containing no elemental sulfur.

6. Use of a stabilized dry zineb which contains from 2 to 8 % by weight of calcium oxide or calcium hydroxide in the absence of elemental sulfur, for controlling fungi.

**Revendications**

1. Procédé de stabilisation de zinèbe sec caractérisé par le fait que l'on mélange du zinèbe, en l'absence de soufre élémentaire, avec 2 à 8 % en poids d'oxyde de calcium ou d'hydroxyde de calcium.

2. Zinèbe stabilisé, obtenu selon la revendication 1.

5

EP 0 170 890 B1

3. Utilisation de 2 à 8 % en poids d'oxyde de calcium ou d'hydroxyde de calcium pour la stabilisation de zinèbe sec en l'absence de soufre élémentaire.

4. Zinèbe sec stabilisé contenant 2 à 8 % en poids d'oxyde de calcium ou d'hydroxyde de calcium en l'absence de soufre élémentaire.

5. Mélange stabilisé de zinèbe sec et de 2 à 8 % en poids d'oxyde de calcium ou d'hydroxyde de calcium qui ne contient pas de soufre élémentaire.

6. Utilisation de zinèbe sec stabilisé qui contient, en l'absence de soufre élémentaire, 2 à 8 % en poids d'oxyde de calcium ou d'hydroxyde de calcium pour la lutte contre les champignons.

6